# EUROPÄISCHE PATENTSCHRIFT

(11) **EP 3 718 927 B1**
(45) Veröffentlichungstag und Bekanntmachung des Hinweises auf die Patenterteilung: **30.04.2025**
(21) Anmeldenummer: 20164544.7
(22) Anmeldetag: 20.03.2020
(51) Int. Cl.: B65D 88/66, B65D 90/02, B33Y 80/00, B65G 27/02, B65G 47/14

(54) **FÖRDERTOPF**
CONVEYOR POT
BOL D'APPROVISIONNEMENT

(30) Priorität: 02.04.2019 DE 102019204690
(43) Veröffentlichungstag der Anmeldung: 07.10.2020
(73) Patentinhaber: ifc intelligent feeding components GmbH, 74229 Oedheim (DE)
(72) Erfinder: Schirmer, Andreas, 74229 Oedheim (DE)
(74) Vertreter: BRP Renaud & Partner mbB Rechtsanwälte Patentanwälte Steuerberater

(56) Entgegenhaltungen:
- EP-A1- 1 593 619
- EP-A2- 0 262 526
- WO-A1-2018/007795
- DE-U1- 20 208 685
- DE-U1- 8 512 794
- DE-U1- 9 421 487
- GB-A- 1 392 789
- JP-A- 2015 059 008

## Beschreibung

Die vorliegende Erfindung betrifft einen Fördertopf für ein Zuführ- und Vorratssystem gemäß dem Oberbegriff des Anspruchs 1 sowie ein Zuführ- und Vorratssystem mit einem solchen Fördertopf für ein Schüttgut-Transportsystem. Ferner betrifft die Erfindung ein Verfahren zur Herstellung eines solchen Fördertopfes. Derartige Zuführ- und Vorratssysteme werden in Produktionsstätten eingesetzt, um Schüttgüter zu lagern und bei Anforderung eine bedarfsgerechte Übergabe der gelagerten Schüttgüter an ein Schüttgut-Transportsystem zu ermöglichen. Das Schüttgut kann hierbei beispielsweise als granulatartiges Schüttgut und/oder als stückiges Schüttgut vorliegen. Unter einem stückigen Schüttgut können beispielsweise Werkstücke, Kleinteile oder Befestigungselemente wie Schrauben, Nägel, Klammern oder Ähnliches verstanden werden. Solche Zuführ- und Vorratssysteme weisen üblicherweise einen Fördertopf auf, in dem das Schüttgut gelagert wird. Über einen mit dem Fördertopf gekoppelten Vibrationsantrieb wird eine Vibrationsbewegung und/oder eine Schwingungsbewegung des Fördertopfes erzwungen, um das im Fördertopf vorhandene Schüttgut zum Schüttgut-Transportsystem zu transportieren. Ein solcher Fördertopf muss aufgrund der Vibrationsbewegungen und/oder Schwingungsbewegungen eine ausreichende mechanische Widerstandsfähigkeit aufweisen, um eine vorgegebenen Mindestlebensdauer nicht zu unterschreiten. Die erforderliche mechanische Widerstandsfähigkeit kann beispielsweise durch eine ausreichende Materialstärke des Fördertopfes erzielt werden, wobei hierdurch das Eigengewicht des Fördertopfes erhöht wird. Nachteilig an einer Erhöhung des Eigengewichtes des Fördertopfes ist zum Beispiel, dass der Vibrationsantrieb einen höheren Energiebedarf aufweist, um eine gewünschte Vibrationsbewegung und/oder Schwingungsbewegung des Fördertopfes zu erzwingen.

Ein gattungsgemäßer Fördertopf ist aus der GB 1 392 789 A bekannt.

Der vorliegenden Erfindung liegt die Aufgabe zugrunde, eine verbesserte oder zumindest andere Ausführungsform eines Fördertopfes anzugeben, die sich insbesondere durch ein geringeres Eigengewicht und/oder eine verbesserte Förderfähigkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, den Fördertopf wenigstens abschnittsweise durch eine Hohlraumstruktur auszubilden, um eine Reduktion des Eigengewichts und/oder verbesserte Förderfähigkeit des Fördertopfes bei ausreichender mechanischer Widerstandsfähigkeit zu erzielen.

Der erfindungsgemäße Fördertopf für ein Zuführ- und Vorratssystem umfasst einen Mantelkörper, der eine Innenfläche und eine Außenfläche aufweist. Der Mantelkörper kann beispielsweise vollständig oder teilweise aus einem metallischen Werkstoff und/oder aus einem Kunststoff, insbesondere einem thermoplastischen Kunststoff, ausgebildet sein. Als Kunststoff können beispielsweise Polyamid 6, Polyamid 11, Polyamid 12, Polyamid 2000, Polylactide und/oder sonstige Kunststoffe eingesetzt werden. Insbesondere können sonstige Kunststoffe eingesetzt werden, die für 3D-Druckverfahren geeignet sind. Es ist auch denkbar, dass der Mantelkörper vollständig oder teilweise durch lichtaushärtende Kunststoffe und/oder Harze ausgebildet ist. Der Mantelkörper kann eine kegelstumpfartige und/oder zylindrische, insbesondere eine kreiszylinderische und/oder kreishohlzylinderische, Grundstruktur aufweisen. Hierbei kann an einem Ende des Mantelkörpers ein Bodenabschnitt angeordnet sein, der beispielsweise eine kreisartige Ausgestaltung aufweist. Ein Teilbereich des Mantelkörpers und/oder ein Teilbereich des Bodenabschnittes kann einen Schüttgut-Aufnahmebereich bzw. einen Vorratsbereich für das Schüttgut ausbilden. Der Mantelkörper kann sich ausgehend von einem Ende und/oder ausgehend vom Bodenabschnitt entlang einer Axialachse aufweiten. Unter "aufweiten" kann hierbei zu verstehen sein, dass die Innenfläche und/oder die Außenfläche des Mantelkörpers mit zunehmenden Abstand zum Bodenabschnitt in einer Radialrichtung betrachtet, die im Wesentlichen quer zur Axialachse ausgerichtet sein kann, einen größeren und/oder zunehmenden Abstand zur Axialachse aufweist. Die Innenfläche ist wenigstens teilweise zum Transportieren eines Schüttgutes ausgebildet. Wird über einen mit dem

Fördertopf gekoppelten Vibrationsantrieb eine Vibrationsbewegung und/oder eine Schwingungsbewegung des Fördertopfes erzwungen, kann das im Fördertopf vorhandene Schüttgut wenigstens abschnittsweise über die Innenfläche zum Schüttgut-Transportsystem transportiert werden. Zwischen der Innenfläche und dem Schüttgut-Transportsystem kann wenigstens ein Funktionselement angeordnet sein. Das Schüttgut-Transportsystem kann als weiterführendes Schüttgut-Transportsystem ausgebildet sein, welches das vom Zuführ- und Vorratssystem bzw. Fördertopf übergebene Schüttgut an seinen Einsatzort weitertransportiert.

Der Mantelkörper bildet wenigstens abschnittsweise zwischen der Innenfläche und der Außenfläche wenigstens eine Hohlraumstruktur aus. Die Hohlraumstruktur kann den Mantelkörper vollständig oder abschnittsweise durchsetzen. Es kann vorgesehen sein, dass die Hohlraumstruktur wenigstens einen Hohlraum und/oder mehrere Hohlräume aufweist. Diese Hohlräume können vollständig und/oder teilweise mantelkörpermaterialfrei und/oder zwischenmaterialfrei ausgebildet sein. Das Mantelkörpermaterial kann dem Zwischenmaterial entsprechen. Das Zwischenmaterial kann dem Mantelkörpermaterial entsprechen. Zwischenwandmetarial kann dem Zwischenmaterial entsprechen. Die Hohlräume können vollständig und/oder teilweise mit granuliertem und/oder pulverförmigen Mantelkörpermaterial und/oder Zwischenmaterial gefüllt sein. Die Hohlräume können als geschlossene und/oder abgeschlossene Hohlräume, insbesondere als geschlossene und/oder abgeschlossene Hohlräume innerhalb des Mantelkörpers, ausgebildet sein, die vollständig und/oder teilweise mit granuliertem und/oder pulverförmigen Mantelkörpermaterial und/oder Zwischenmaterial gefüllt sein können. Mit anderen Worten ausgedrückt, kann das granulierte und/oder pulverförmige Mantelkörpermaterial und/oder Zwischenmaterial im jeweiligen geschlossenen und/oder abgeschlossenen Hohlraum gekapselt, insbesondere verliersicher gekapselt, sein. Hohlräume der Hohlraumstruktur können entlang einer Radialrichtung des Fördertopfes und/oder entlang einer Umfangsrichtung zueinander beabstandet angeordnet sein. Eine solche Beabstandung kann durch Mantelkörpermaterial ausgebildet sein. Durch die Hohlräume kann das Eigengewicht des Fördertopfes bei im Wesentlichen gleichbleibender mechanischer Widerstandsfähigkeit reduziert werden, sodass die erforderliche Energie, um den Fördertopf in eine Vibrationsbewegung und/oder Schwingungsbewegung zu versetzen, minimiert werden kann. Ein Zuführ- und Vorratssystem arbeitet besonders energieeffizient, wenn der Fördertopf mit seiner Resonanzfrequenz angetrieben wird. Ein weiterer erfindungsgemäßer Vorteil ergibt sich nunmehr dadurch, dass das Trägheitsmoment des Fördertopfes durch eine vorteilhaftere Massenverteilung reduziert und/oder angepasst und/oder optimiert wird, wobei möglicherweise eine Erhöhung der Resonanzfrequenz des Fördertopfes erzielt werden kann. Somit wird nicht nur eine energieeffizientere Transportierung bzw. Förderung des Schüttgutes ermöglicht, sondern durch die erhöhte Resonanzfrequenz auch eine schnellere Förderung des Schüttgutes bereitgestellt. Somit kann bei gleichzeitiger Energieeinsparung pro Zeiteinheit eine größere Menge an Schüttgut befördert bzw. transportiert werden. Somit ergibt sich eine höhere Fördergeschwindigkeit des Schüttgutes. Ein weiterer Vorteil des erfindungsgemäßen Fördertopfes ist, dass insbesondere bei einer Fertigung mit einem 3D-Druckverfahren weniger Wärme erzeugt und/oder benötigt wird, sodass die benötigte Herstellenergie und damit die Herstellkosten reduziert werden können. Ein weiterer Vorteil ist, dass sich eine verbesserte Bauteilqualität und/oder Druckqualität des Fördertopfes ergibt, da ein geringerer Wärmeverzug des Fördertopfes auftritt.

Erfindungsgemäß ist vorgesehen, dass die Innenfläche eine Förderstruktur zum Transportieren eines Schüttgutes aufweist. Wird über einen mit dem Fördertopf gekoppelten Vibrationsantrieb eine Vibrationsbewegung und/oder eine Schwingungsbewegung des Fördertopfes erzwungen, wird das im Fördertopf vorhandene Schüttgut über die Förderstruktur zum Schüttgut-Transportsystem transportiert. Zwischen der Förderstruktur und dem Schüttgut-Transportsystem kann wenigstens ein Funktionselement angeordnet sein. Das Schüttgut-Transportsystem kann ein Förderband und/oder einen Linearantrieb mit einem Vibrationsantrieb umfassen. Ein solcher Linearantrieb kann eine Schiene umfassen. Ein solcher Linearantrieb und/oder eine solche Schiene können einen eine Führungssicke und/oder einen Deckelabschnitt umfassen. Der Linearantrieb kann wenigstens ein Federpaket umfassen. Bei einer weiteren vorteilhaften Ausführungsform der erfindungsgemäßen Lösung ist vorgesehen, dass eine Unwucht des Fördertopfes und/oder des Mantelkörpers, insbesondere eine durch wenigstens ein am Fördertopf und/oder Mantelkörper angebrachtes Funktionselement verursachte Unwucht, durch die Hohlraumstruktur kompensiert oder wenigstens reduziert ist. Hierdurch kann der Verschleiß des Fördertopfes und/oder Mantelkörpers reduziert werden und zusätzlich eine verbesserte Transportierung bzw. Förderung des Schüttgutes erzielt werden.

Bei einer vorteilhaften Weiterbildung der erfindungsgemäßen Lösung ist vorgesehen, dass die Hohlraumstruktur mehrere Hohlräume ausbildet, wobei benachbarte Hohlräume wenigstens abschnittsweise durch wenigstens eine Zwischenwandung des Mantelkörpers voneinander getrennt sind. Zwischenwandungen können festkörperartig ausgebildet sein. Das von allen Zwischenwandungen der Hohlraumstruktur ausgefüllte Raumvolumen definiert ein Zwischenmaterialvolumen, wobei dass das von allen Hohlräumen der Hohlraumstruktur begrenzte Hohlvolumen ein Gesamthohlvolumen definiert. Hierbei ist das Gesamthohlvolumen kleiner oder größer oder gleich dem Zwischenmaterialvolumen. Die Hohlräume können vollständig und/oder teilweise mantelkörpermaterialfrei und/oder zwischenmaterialfrei ausgebildet sein. Die Hohlräume können vollständig und/oder teilweise mit granuliertem und/oder pulverförmigen Mantelkörpermaterial und/oder Zwischenmaterial gefüllt sein. Die Hohlräume können als geschlossene und/oder abgeschlossene Hohlräume, insbesondere als geschlossene und/oder abgeschlossene Hohlräume innerhalb des Mantelkörpers, ausgebildet sein, die vollständig und/oder teilweise mit granuliertem und/oder pulverförmigen Mantelkörpermaterial und/oder Zwischenmaterial gefüllt sein können. Mit anderen Worten ausgedrückt, kann das granulierte und/oder pulverförmige Mantelkörpermaterial und/oder Zwischenmaterial im jeweiligen geschlossenen und/oder abgeschlossenen Hohlraum gekapselt, insbesondere verliersicher gekapselt, sein. Vorteilhaft hieran ist, dass insbesondere bei einer Fertigung mit einem 3D-Druckverfahren weniger Wärme erzeugt und/oder benötigt wird, sodass die benötigte Herstellenergie und damit die Herstellkosten reduziert werden können. Ein weiterer Vorteil ist, dass sich eine verbesserte Bauteilqualität und/oder Druckqualität des Fördertopfes ergibt, da ein geringerer Wärmeverzug bzw. Abkühlverzug des Fördertopfes auftritt.

Erfindungsgemäß wird beim 3D-Druckverfahren eine Unwucht des Fördertopfes und/oder des Mantelkörpers, insbesondere eine durch wenigstens ein am Fördertopf und/oder Mantelkörper angebrachtes Funktionselement verursachte Unwucht, durch die Hohlraumstruktur kompensiert oder wenigstens reduziert, wenn die Hohlräume vollständig und/oder teilweise mit granuliertem und/oder pulverförmigen Mantelkörpermaterial und/oder Zwischenmaterial gefüllt sind. Bei einem 3D-Druckverfahren weist das erwärmte bzw. geschmolzene Mantelkörpermaterial und/oder Zwischenmaterial eine andere Dichte auf als das granulierte und/oder pulverförmige Mantelkörpermaterial und/oder Zwischenmaterial. Somit kann die Förderfähigkeit des Fördertopfes und/oder des Mantelkörpers verbessert und/oder eine Unwucht des Fördertopfes und/oder des Mantelkörpers reduziert werden, obwohl die Hohlräume vollständig mit granuliertem und/oder pulverförmigen Mantelkörpermaterial und/oder Zwischenmaterial gefüllt sind. Hierdurch kann vorteilhafterweise die Materialmengenverteilung bzw. die Mantelkörpermaterialverteilung bzw. die Zwischenmaterialverteilung pro Raumvolumen des Mantelkörpers angepasst werden, um eine weitere Reduktion des Eigengewichts des Fördertopfes und/oder um eine weitere Reduktion des Trägheitsmomentes des Fördertopfes zu erzielen.

Bei einer weiteren vorteilhaften Ausführungsform der erfindungsgemäßen Lösung ist vorgesehen, dass die Hohlraumstruktur mehrere Abschnitte aufweist, wobei ein Abschnitt mehrere Hohlräume ausbildet, wobei benachbarte Hohlräume des Abschnittes wenigstens abschnittsweise durch wenigstens eine Zwischenwandung des Mantelkörpers voneinander getrennt sind. Dass von allen Zwischenwandungen eines Abschnittes der Hohlraumstruktur ausgefüllte Raumvolumen definiert ein Abschnittsmaterialvolumen. Dass von allen Hohlräumen eines Abschnittes der Hohlraumstruktur begrenzte Hohlvolumen definiert ein Abschittshohlvolumen. Hierbei ist das Verhältnis von Abschittshohlvolumen zu Abschnittsmaterialvolumen für verschiedene Abschnitte der Hohlraumstruktur gleich und/oder verschiedenen ausgebildet ist. Es können mehrere Abschnitte ausgebildet sein, die ein im Wesentlichen gleiches Verhältnis von Abschittshohlvolumen zu Abschnittsmaterialvolumen aufweisen. Es können mehrere Abschnitte ausgebildet sein, die verschiedene Verhältnisse von Abschittshohlvolumen zu Abschnittsmaterialvolumen aufweisen. Hierbei kann wenigstens ein erster Abschnitt ein kleineres oder größeres Verhältnis von Abschittshohlvolumen zu Abschnittsmaterialvolumen aufweisen als ein zweiter Abschnitt.

Bei einer vorteilhaften Weiterbildung der erfindungsgemäßen Lösung ist vorgesehen, dass die Hohlraumstruktur entlang einer Axialachse und/oder entlang einer Radialrichtung und/oder entlang einer Umfangsrichtung des Fördertopfes mehrere Abschnitte aufweist, wobei das Verhältnis von Abschittshohlvolumen zu Abschnittsmaterialvolumen der Abschnitte wenigstens abschnittsweise entlang einer Axialachse und/oder entlang einer Radialrichtung und/oder entlang einer Umfangsrichtung des Fördertopfes variiert, insbesondere linear, nichtlinear und/oder stufenweise variiert. Unter einer Variation kann eine Vergrößerung oder eine Verkleinerung des Verhältnisses von Abschittshohlvolumen zu Abschnittsmaterialvolumen verstanden werden. Somit kann eine lokale Anpassung des Verhältnisses von Abschittshohlvolumen zu Abschnittsmaterialvolumen der jeweiligen Abschnitte der Hohlraumstruktur erfolgen.

Bei einer weiteren vorteilhaften Ausführungsform der erfindungsgemäßen Lösung ist vorgesehen, dass wenigstens ein Hohlraum der Hohlraumstruktur in einer Hohlraumöffnung an der Außenfläche mündet, oder dass eine Gruppe von Hohlräumen der Hohlraumstruktur in einer gemeinsamen Hohlraumöffnung an der Außenfläche mündet, oder dass alle Hohlräume der Hohlraumstruktur jeweils in einer separaten Hohlraumöffnung an der Außenfläche münden. Hierbei kann die Außenfläche wenigstens eine und/oder mehrere Hohlraumöffnungen ausbilden. Es kann vorgesehen sein, dass der Hohlraum und/oder die Hohlräume durch die Hohlraumöffnung und/oder die Hohlraumöffnungen fluidisch mit einer Außenumgebung des Fördertopfes bzw. mit einer Umgebungsluft des Fördertopfes verbunden sind.

Ein besonderer Vorteil ergibt sich bei der Herstellung des Fördertopfes durch ein 3D-Druckverfahren, insbesondere bei einem 3D-Druckverfahren, welches auf einem Pulververfahren bzw. einem Pulverbettverfahren basiert, bei dem das Mantelkörpermaterial und/oder das Zwischenmaterial des Mantelkörpers im Rohzustand in einer pulverförmigen und/oder granulierten Form vorliegt. Nach der Herstellung des Fördertopfes durch das 3D-Druckverfahren kann das überschüssige pulverförmige bzw. granulierte Mantelkörpermaterial und/oder Zwischenmaterial aus den Hohlräumen ohne zusätzlichen Arbeitsaufwand entfernt werden. Ein weiterer Vorteil ist, dass somit pulverförmiges und/oder granuliertes Mantelkörpermaterial und/oder Zwischenmaterial eingespart werden kann, sodass die Herstellungskosten des Fördertopfes auch im Rahmen von kleineren Produktionsstückzahlen reduziert werden können. Ein weiterer Vorteil ist, dass das Mantelkörpermaterial und/oder das Zwischenmaterial im Bereich der Außenfläche reduziert wird, die zwar vergleichsweise wenig zu mechanischen Widerstandsfähigkeit beiträgt, jedoch aufgrund ihres Abstandes zur Axialachse zu einer vergleichsweise starken Erhöhung des Trägheitsmomentes führt. Durch die Nutzung der Hohlraumöffnungen kann die Verteilung des Mantelkörpermaterials bezüglich einer weiteren Reduzierung des Trägheitsmomentes des Fördertopfes optimiert werden. Durch die Hohlräume kann somit das Eigengewicht des Fördertopfes bei im Wesentlichen gleichbleibender mechanischer Widerstandsfähigkeit reduziert werden, sodass die erforderliche Energie, um den Fördertopf in eine Vibrationsbewegung und/oder Schwingungsbewegung zu versetzen, minimiert werden kann.

Bei einer vorteilhaften Weiterbildung der erfindungsgemäßen Lösung ist vorgesehen, dass wenigstens ein Hohlraum der Hohlraumstruktur eine Hohlraumlängserstreckung aufweist, die im Wesentlichen parallel oder quer oder unter einem Winkel und/oder windschief zu einer Axialachse des Fördertopfes ausgebildet ist, oder dass alle Hohlräume der Hohlraumstruktur jeweils eine Hohlraumlängserstreckung aufweisen, die jeweils im Wesentlichen parallel oder quer oder unter einem Winkel und/oder windschief zu einer Axialachse des Fördertopfes ausgebildet sind. Dies ermöglicht beispielsweise einen im Wesentlichen symmetrischen Aufbau des Fördertopfes bezüglich der Axialachse. Es kann auch vorgesehen sein, das wenigstens ein Hohlraum oder alle Hohlräume im Wesentlichen senkrecht zur Innenfläche des Mantelkörpers ausgerichtet sind.

Bei einer weiteren vorteilhaften Ausführungsform der erfindungsgemäßen Lösung ist vorgesehen, dass wenigstens ein Hohlraum der Hohlraumstruktur eine Hohlraumlängserstreckung aufweist, wobei dieser Hohlraum bezüglich seiner Hohlraumlängserstreckung zylindrisch oder konisch ausgebildet ist, oder dass alle Hohlräume der Hohlraumstruktur jeweils eine Hohlraumlängserstreckung aufweisen, wobei die Hohlräume bezüglich ihrer jeweiligen Hohlraumlängserstreckung zylindrisch oder konisch ausgebildet sind. Konische Hohlräume können zur Außenfläche hin konisch verjüngend ausgebildet sein. Konische Hohlräume können zur Außenfläche hin konisch aufweitend ausgebildet sein. Konische Hohlräume können abschnittweise zur Außenfläche hin konisch aufweitend und/oder abschnittweise zur Außenfläche hin konisch verjüngend ausgebildet sein. Es kann vorgesehen sein, dass alle Hohlräume eine im Wesentlichen identische zylindrische oder konische Ausgestaltung aufweisen, oder dass eine erste Gruppe von Hohlräumen eine in Wesentlichen identische erste zylindrische oder konische Ausgestaltung aufweisen, während eine zweite Gruppe von Hohlräumen eine im Wesentlichen identische zweite zylindrische oder konische Ausgestaltung aufweisen, wobei die erste zylindrische oder konische Ausgestaltung im Vergleich zu zweiten zylindrischen oder konischen Ausgestaltung andersartig ausgebildet sein kann. Hierbei kann der jeweilige Hohlraum eine Querschnittsfläche quer bezüglich seiner Hohlraumlängserstreckung ausbilden, die durch eine geschlossene Begrenzungskontur begrenzt sein kann. Diese Begrenzungskontur kann beispielsweise kreisförmig, ellipsenförmig, dreiecksförmig, viereckförmig, rautenförmig, achteckförmig, wabenförmig, polygonartig, X-förmig, Y-förmig, L-förmig, U-förmig, T-förmig oder I-förmig ausgebildet sein.

Bei einer vorteilhaften Weiterbildung der erfindungsgemäßen Lösung ist vorgesehen, dass wenigstens ein Hohlraum der Hohlraumstruktur eine Hohlraumlängserstreckung aufweist, wobei ein solcher Hohlraum wenigstens abschnittsweise eine wabenartige, rautenartige, dreieckartige, viereckartige, sechseckartige, achteckartige, kreisartige, ellipsenartige, polygonartig, X-artige, Y-artige, L-artige, U-artige, T-artige und/oder I-artige Querschnittsfläche quer bezüglich seiner Hohlraumlängserstreckung ausbildet, oder dass alle Hohlräume der Hohlraumstruktur jeweils eine Hohlraumlängserstreckung aufweisen, wobei die Hohlräume jeweils wenigstens abschnittsweise eine wabenartige, rautenartige, dreieckartige, viereckartige, sechseckartige, achteckartige, kreisartige, ellipsenartige, polygonartig, X-artige, Y-artige, L-artige, U-artige, T-artige und/oder I-artige Querschnittsfläche quer bezüglich ihrer Hohlraumlängserstreckung ausbilden. Hierdurch wird ein optimales Verhältnis von Zwischenwandmaterial bzw. Mantelkörpermaterial zu Hohlraumvolumen für ein gegebenes Raumvolumen bei einer erforderlichen mechanischen Widerstandsfähigkeit erzielt. Eine sechseckartige Querschnittsfläche kann ein regelmäßiges Sechseck ausbilden. Es kann vorgesehen sein, dass eine Sechseckbreite bzw. ein Sechseckinnendurchmesser der Querschnittsfläche des Hohlraumes größer ist als eine Wandstärke der Zwischenwandung des Mantelkörpers. Es kann auch vorgesehen sein, dass eine Sechseckbreite bzw. ein Sechseckinnendurchmesser der Querschnittsfläche des Hohlraumes kleiner ist als eine Wandstärke der Zwischenwandung des Mantelkörpers. Es kann auch vorgesehen sein, dass eine Sechseckbreite bzw. ein Sechseckinnendurchmesser der Querschnittsfläche des Hohlraumes im Wesentlichen der Wandstärke der Zwischenwandung des Mantelkörpers entspricht.

Es kann vorgesehen sein, dass ein Verhältnis von Sechseckbreite bzw. Sechseckinnendurchmesser zur einer Wandstärke einer Zwischenwandung des Mantelkörpers wenigstens einem Verhältnis von 2, insbesondere von 3, entspricht. Die Sechseckbreite kann beispielsweise eine Breite von 1 mm bis 200 mm, insbesondere von 1 mm bis 100 mm, insbesondere von 1 mm bis 60 mm, insbesondere von 1 mm bis 50 mm, insbesondere 1 mm bis 30 mm, insbesondere von 5 mm bis 30 mm, insbesondere von 10 mm bis 30 mm, aufweisen. Die Sechseckbreite kann beispielsweise insbesondere eine Breite von 9 mm bis 21 mm, insbesondere von 10 mm bis 20 mm, insbesondere von 15 mm, aufweisen. Die Wandstärke einer Zwischenwandung zwischen zwei Hohlräumen kann beispielsweise 1 mm bis 10 mm, insbesondere 2,5 mm bis 7,5 mm, insbesondere 5 mm, betragen. Der Fördertopf kann eine Außenwandstärke von 2,5 mm bis 7,5 mm, insbesondere von 5 mm, aufweisen. Diese Bereiche und/oder Abmessungen sind besonders vorteilhaft, da im Spannungsverhältnis von mechanischer Widerstandsfähigkeit und Eigengewichtsreduzierung des Fördertopfes ein optimales Betriebsergebnis für einen breiten Einsatzbereich des Fördertopfes erzielt werden kann. Hierdurch kann der Fördertopf und/oder der Mantelkörper als Einheitsteil für eine Vielzahl von Anwendungen mit unterschiedlichen Schüttgütern eingesetzt werden, wodurch die Stückkosten bei der Herstellung reduziert werden können.

Bei einer weiteren vorteilhaften Ausführungsform der erfindungsgemäßen Lösung ist vorgesehen, dass die Hohlraumstruktur wenigstens abschnittsweise eine Zellstruktur, insbesondere eine Wabenstruktur und/oder eine Dreiecksstruktur und/oder eine Kreisstruktur und/oder eine Achteckstruktur und/oder eine Viereckstruktur und/oder eine Rautenstruktur und/oder eine EIlipsenstruktur und/oder eine polygonartig Zellstruktur und/oder eine X-artige Zellstruktur und/oder eine Y-artige Zellstruktur und/oder eine L-artige Zellstruktur und/oder eine U-artige Zellstruktur und/oder eine T-artige Zellstruktur und/oder eine I-artige Zellstruktur ausbildet. Unter einer Zellstruktur kann ein Gebilde aus einer Vielzahl von dreidimensionalen Körpern verstanden werden, wobei die Körper durch Seitenkanten definiert werden können, wobei jeweils zwei Seitenkanten durch wenigstens eine Fläche miteinander verbunden werden können. Im Rahmen dieser Erfindung kann sich eine Zellstruktur dadurch auszeichnen, dass entweder Seitenkanten und/oder Seitenflächen der Zellstruktur durch ein Zwischenwandmaterial und/oder Mantelkörpermaterial ausgebildet sind. Hierbei kann es auch vorgesehen sein, dass alle oder auch nur ein Teil Seitenkanten und/oder Seitenflächen der Zellstruktur durch ein Zwischenwandmaterial und/oder Mantelkörpermaterial ausgebildet sind. Seitenkanten und Flächen der Zellstruktur können festkörperartig ausgebildet sein. Durch die Verwendung einer Zellstruktur kann der Fördertopf in einer Leichtbauweise mit reduziertem Eigengewicht zur Verfügung gestellt werden.

Bei einer vorteilhaften Weiterbildung der erfindungsgemäßen Lösung ist vorgesehen, dass die Hohlraumstruktur wenigstens abschnittsweise eine Gitterstruktur, insbesondere eine Gitterstruktur, die sich entlang von Körperdiagonalen erstreckt, und/oder eine kreuzartige Gitterstruktur und/oder eine diamantartige Gitterstruktur und/oder eine G-artige Gitterstruktur und/oder eine oktettartige Gitterstruktur und/oder eine rhombusartige Gitterstruktur und/oder eine oktaederartige Gitterstruktur und/oder eine dodeartige Gitterstruktur, ausbildet. Unter einer Gitterstruktur kann ein Gebilde aus einer Vielzahl von dreidimensionalen Körpern ohne Seitenflächen verstanden werden, wobei die Körper durch Seitenkanten definiert werden können. Im Rahmen dieser Erfindung kann sich eine Gitterstruktur dadurch auszeichnen, dass die Seitenkanten der Gitterstruktur durch ein Zwischenwandmaterial und/oder Mantelkörpermaterial ausgebildet sind.

Seitenkanten der Gitterstruktur können festkörperartig ausgebildet sein.

Hierbei kann es auch vorgesehen sein, dass alle oder auch nur ein Teil der Seitenkanten der Gitterstruktur durch ein Zwischenwandmaterial und/oder Mantelkörpermaterial ausgebildet sind. Die durch das Zwischenwandmaterial und/oder Mantelkörpermaterial ausgebildeten Seitenkanten können als Gitterstäbe vorliegen, deren Querschnittsausdehnung quer zu einer Längsrichtung kleiner als ihre Längsausdehnung entlang der Längsrichtung ist. Es ist denkbar, dass eine Zellstruktur oder ein Teilbereich der Zellstruktur durch eine Gitterstruktur verstärkt ist. Es ist denkbar, dass eine Zellstruktur oder ein Teilbereich der Zellstruktur durch eine Gitterstruktur aufweist. Durch die Verwendung einer Gitterstruktur kann der Fördertopf in einer Leichtbauweise mit reduziertem Eigengewicht zur Verfügung gestellt werden.

Bei einer vorteilhaften Weiterbildung der erfindungsgemäßen Lösung ist vorgesehen, dass die Förderstruktur einen schraubenförmig und/oder wendelförmig und/oder spiralförmig umlaufenden Rampenabschnitt ausbildet, der an der Innenfläche angeordnet ist und auf dem ein Schüttgut aus dem Fördertopf förderbar ist. Fördertöpfe mit einem solchen Rampenabschnitt zur Entnahme der Schüttgüter sind besonders günstig, da durch den umlaufenden Rampenabschnitt eine große Förderhöhe des Schüttguts erzielt werden kann, so dass insgesamt ein großes Volumen in einem Schüttgut-Aufnahmebereich bereit gestellt werden kann, so dass eine große Menge an Schüttgut im Zuführ- und Vorratssystem gelagert werden kann.

Bei einer weiteren vorteilhaften Ausführungsform der erfindungsgemäßen Lösung ist vorgesehen, dass der Fördertopf einen Schüttgut-Aufnahmebereich ausbildet, der wenigstens teilweise durch einen am Mantelkörper angeordneten Boden-abschnitt ausgebildet ist. Ferner weist der Fördertopf wenigstens einen Bestückungsabschnitt auf, der wenigstens teilweise durch den Mantelkörper ausgebildet ist, wobei der Bestückungsabschnitt vom Bodenabschnitt und/oder vom Schüttgut-Aufnahmebereich beabstandet angeordnet ist. Der Bodenabschnitt kann integral vom Mantelkörper ausgebildet sein, wobei auch denkbar ist, dass der Bodenabschnitt separat vom Mantelkörper hergestellt ist und am Mantelkörper befestigt ist.

Bei einer vorteilhaften Weiterbildung der erfindungsgemäßen Lösung ist vorgesehen, dass der Fördertopf die Förderstruktur integral ausbildet, und/oder dass der Fördertopf den Schüttgut-Aufnahmebereich und/oder den Bodenabschnitt (19) integral ausbildet, und/oder dass der Bestückungsabschnitt mit wenigstens einem Funktionselement bestückt ist, wobei das Funktionselement separat zum Fördertopf ausgebildet ist. Ein solches Funktionselement kann eine Vereinzelungseinrichtung sein, durch welche die Schüttgüter, die aus dem Schüttgut-Aufnahmebereich transportiert werden, vereinzelt werden. Ein solches Funktionselement kann eine Ausrichteinrichtung sein, welche die Lage der Schüttgüter ausrichtet. Ein solches Funktionselement kann eine Rückführrampe sein, über welche aussortierte Schüttgüter in den Schüttgut-Aufnahmebereich zurück transportiert werden können. Ein solches Funktionselement kann eine Übergaberampe sein, über welche aus dem Schüttgut-Aufnahmebereich geförderten Schüttgüter auf das Schüttgut-Transportsystem übergeben werden können. Dies ermöglicht einen modularen Aufbau sowie Einsatz des Fördertopfes.

Bei einer weiteren vorteilhaften Ausführungsform der erfindungsgemäßen Lösung ist vorgesehen, dass der Fördertopf und/oder der Mantelkörper aus mehreren separat hergestellten Einzelteilen ausgebildet ist, oder dass der Fördertopf und/oder der Mantelkörper einstückig und/oder einteilig ausgebildet ist. Es kann vorgesehen sein, dass der Fördertopf und/oder der Mantelkörper in segmentförmige Einzelteile aufgeteilt ist. Der Fördertopf kann also in kuchenstückförmige Einzelteile unterteilt sein. Diese Einzelteile lassen sich einfach zueinander positionieren. Es kann vorgesehen sein, dass der Fördertopf und/oder der Mantelkörper in scheibenförmige bzw. ringförmige Einzelteile aufgeteilt ist. Durch diese Aufteilung der Einzelteile können niedrige Einzelteile und/oder niedrige Einzelteilhöhen erzielt werden, sodass bei 3D-Druckverfahren die Druckhöhe klein gehalten werden kann.

Bei einer vorteilhaften Weiterbildung der erfindungsgemäßen Lösung ist vorgesehen, dass der Fördertopf und/oder der Mantelkörper und/oder seine Einzelteile wenigstens teilweise aus Vollmaterial durch spanabhebende Bearbeitung hergestellt ist, und/oder dass der Fördertopf und/oder der Mantelkörper und/oder seine Einzelteile wenigstens teilweise durch Kunststoffspritzguss hergestellt ist. Erfindungsgemäß ist der Fördertopf und/oder der Mantelkörper und/oder seine Einzelteile wenigstens teilweise durch ein 3D-Druckverfahren hergestellt. Als 3D-Druckverfahren kann beispielsweise Selektives Lasersintern (SLS), Multi-Jet Modeling (MJM), Stereolithografie (SLA), Fused Deposition Modeling (FDM), Fused Filament Fabrication (FFF) oder Continous Filament Fabrication (CFF) eingesetzt werden. Beim SLS-Verfahren sowie beim MJM-Verfahren kann ein Grundmaterial des Fördertopfes und/oder des Mantelkörpers im Rohzustand in einer pulverförmigen und/oder granulierten Form vorliegen. Das pulverförmige und/oder granulierte Grundmaterial kann aus einem metallischen Werkstoff und/oder einem Kunststoff, insbesondere einem thermoplastischen Kunststoff, ausgebildet sein. Als Kunststoff können beispielsweise Polyamid 6, Polyamid 11, Polyamid 12, Polyamid 2000 Polylactide und/oder sonstige Kunststoffe eingesetzt werden. Insbesondere können sonstige Kunststoffe eingesetzt werden, die für 3D-Druckverfahren geeignet sind. Beim SLA-Verfahren kann ein Grundmaterial des Fördertopfes und/oder des Mantelkörpers im Rohzustand in einer flüssigen Form vorliegen. Es ist auch denkbar, dass der Fördertopf und/oder der Mantelkörper und/oder seine Einzelteile vollständig oder teilweise durch lichtaushärtende Kunststoffe und/oder Harze, ausgebildet ist.

Ferner betrifft die Erfindung einen Fördertopf für ein Zuführ- und Vorratssystem, wobei der Fördertopf einen Mantelkörper mit einer Innenfläche und eine Außenfläche aufweist, dass die Innenfläche und/oder eine Förderstruktur des Fördertopfes wenigstens abschnittsweise eine Funktionsstrukturoberfläche ausbildet. Die Funktionsstrukturoberfläche kann beispielweise eine Rillenstruktur und/oder Hindernisse und/oder Schikanenabschnitte ausbilden. Die Funktionsstrukturoberfläche kann Schlitzabschnitt ausbilden und/oder geschlitzt ausgebildet sein. Eine Rillenstruktur kann beispielsweise einen geschrägten Laufflächenabschnitt, insbesondere einen nach außen und/oder radial nach außen geschrägten Laufflächenabschnitt, umfassen. Hierdurch kann beispielsweise Vorsortierung und/oder Vorvereinzelung des Schüttgutes bewirkt werden, sodass die Fördergeschwindigkeit des Schüttgutes erhöht werden kann. Dies kann beispielweise bei Schüttgütern eingesetzt werden, die Oberflächenabschnitt aufweisen, die unterschiedliche Reibungen ausgesetzt sind. Solche Schüttguter können Oberflächenabschnitt aus Kunststoff sowie gummierte Oberflächenabschnitte aufweisen.

Bei einer vorteilhaften Weiterbildung der erfindungsgemäßen Lösung ist vorgesehen, dass die Funktionsstrukturoberfläche wenigstens abschnittsweise zur Vorsortierung und/oder Vorvereinzelung von Schüttgut ausgebildet ist. Die Funktionsstrukturoberfläche kann eine Vereinzelungseinrichtung ausbilden, durch welche die Schüttgüter, die aus dem Schüttgut-Aufnahmebereich transportiert werden, vereinzelt werden. Die Funktionsstrukturoberfläche kann eine Ausrichteinrichtung ausbilden, welche die Lage der Schüttgüter ausrichtet. Die Funktionsstrukturoberfläche kann eine Rückführrampe ausbilden, über welche aussortierte Schüttgüter in den Schüttgut-Aufnahmebereich zurück transportiert werden können. Die Funktionsstrukturoberfläche kann eine Übergaberampe ausbilden, über welche aus dem Schüttgut-Aufnahmebereich geförderten Schüttgüter einem Funktionselement und/oder auf das Schüttgut-Transportsystem übergeben werden können.

Ferner betrifft die Erfindung ein Zuführ- und Vorratssystem für ein Schüttgut-Transportsystem, wobei das Zuführ- und Vorratssystem einen erfindungsgemäßen Fördertopf aufweist. Ferner weist das Zuführ- und Vorratssystem einen Vibrationsantrieb zum Transport eines Schüttgutes entlang der Förderstruktur des Fördertopfes auf, wobei der Vibrationsantrieb mit dem Fördertopf mittelbar oder unmittelbar gekoppelt ist. Es kann auch ein Schüttgut-Transportsystem mit einem erfindungsgemäßen Zuführ- und Vorratssystem ausgebildet sein. Ein solches Schüttgut-Transportsystem kann ein Förderband und/oder einen Linearantrieb mit einem Vibrationsantrieb umfassen. Ein solcher Linearantrieb kann eine Schiene umfassen. Ein solcher Linearantrieb und/oder eine solche Schiene können einen eine Führungssicke und/oder einen Deckelabschnitt umfassen. Der Linearantrieb kann wenigstens ein Federpaket umfassen. Der Vibrationsantrieb kann so ausgebildet sein, dass der Fördertopf mit seiner Resonanzfrequenz oder mit einer Frequenz in der Nähe der Resonanzfrequenz zu Schwingungsbewegungen und/oder Vibrationsbewegungen angeregt wird. Bei einer unmittelbaren Kopplung kann der Vibrationsantrieb mit einer Vibrationsköperfläche beispielweise im Wesentlichen spaltfrei am Bodenabschnitt des Fördertopfes anliegen. Bei einer mittelbaren Kopplung kann zwischen dem Vibrationsantrieb und dem Fördertopf beispielsweise ein Getriebe, insbesondere ein Koppelgetriebe, angeordnet sein. Der Vibrationsantrieb kann Federelemente aufweisen, die zur Erzeugung von Vibrationsbewegungen und/oder Schwingungsbewegungen beitragen. Der Vibrationsantrieb kann eine Trägerplatte umfassen, auf der der Fördertopf angeordnet sein kann. Ferner kann der Vibrationsantrieb eine Bodenplatte aufweisen, wobei zwischen der Bodenplatte und der Trägerplatte Federelemente angeordnet sein können. Die Trägerplatte kann eine Aufliegefläche aufweisen, auf der ein Bodenabschnitt des Fördertopfes aufliegt, insbesondere spaltfrei aufliegt. Die Federelemente können beispielsweise unter einem Winkel zum Flächennormalenvektor einer Aufliegefläche der Trägerplatte für den Fördertopf ausgerichtet sein. Die Federelemente können beispielsweise aus metallischem Werkstoff und/oder Stahl und/oder Federstahl und/oder Kohlefasern ausgebildet sein. Die Trägerplatte kann über eine magnetische und/oder elektromagnetische Krafteinwirkung in Richtung der Bodenplatte angezogen werden, wobei die Federelemente wenigstens teilweise vorgespannt werden. Hierfür kann beispielsweise ein Zugmagnet vorgesehen sein. Der Zugmagnet kann eine Spulenvorrichtung umfassen, die durch eine geeignete elektrische Bestromung ein Magnetfeld erzeugt. Die kann Magnetfeldstärke und/oder die Einwirkzeit des Magnetfeldes. Sobald die magnetische und/oder elektromagnetische Krafteinwirkung abgeschaltet und/oder abgeschirmt wird, wirken die Federelemente auf die Trägerplatte dergestalt ein, dass die Trägerplatte eine kombinierte Dreh- und/oder Translationsbewegung ausführt. Die Federelemente führen also im Wesentlichen zu einer Vertikalbewegung der Trägerplatte, bei der die Trägerplatte teilweise eine Drehbewegung ausführt.

Bei einer vorteilhaften Weiterbildung der erfindungsgemäßen Lösung ist vorgesehen, dass das Zuführ- und Vorratssystem als Vibrationswendelförderer zur vertikalen Förderung eines Schüttgutes ausgebildet ist. Eine vertikale Förderung des Schüttgutes kann dabei Entlang der Axialachse des Fördertopfes erfolgen. Hierbei kann es vorgesehen sein, dass der Abstand des Schüttgutes bzw. einzelner Schüttgüter zum Bodenabschnitt innerhalb eines vorgegebenen Zeitintervalls zunimmt.

Ferner betrifft die Erfindung ein Verfahren nach Anspruch 11 zur Herstellung eines erfindungsgemäßen Fördertopfes, bei dem der Fördertopf und/oder der Mantelkörper und/oder seine Einzelteile wenigstens teilweise durch ein 3D-Druckverfahren hergestellt wird. Als 3D-Druckverfahren kann beispielsweise Selektives Lasersintern (SLS), Multi-Jet Modeling (MJM), Stereolithografie (SLA), Fused Deposition Modeling (FDM), Fused Filament Fabrication (FFF) oder Continous Filament Fabrication (CFF) eingesetzt werden. Beim SLS-Verfahren sowie beim MJM-Verfahren kann ein Grundmaterial des Fördertopfes und/oder des Mantelkörpers im Rohzustand in einer pulverförmigen und/oder granulierten Form vorliegen. Das pulverförmige und/oder granulierte Grundmaterial kann aus einem metallischen Werkstoff und/oder einem Kunststoff, insbesondere einem thermoplastischen Kunststoff, ausgebildet sein. Als Kunststoff können beispielsweise Polyamid 6, Polyamid 11, Polyamid 12, Polyamid 2000, Polylactide und/oder sonstige Kunststoffe eingesetzt werden. Insbesondere können sonstige Kunststoffe eingesetzt werden, die für 3D-Druckverfahren geeignet sind. Beim SLA-Verfahren kann ein Grundmaterial des Fördertopfes und/oder des Mantelkörpers im Rohzustand in einer flüssigen Form vorliegen. Es ist auch denkbar, dass der Fördertopf und/oder der Mantelkörper und/oder seine Einzelteile vollständig oder teilweise durch lichtaushärtende Kunststoffe und/oder Harze, ausgebildet wird. Ein weiterer Vorteil des erfindungsgemäßen Verfahrens ist, dass bei einer Fertigung mit einem 3D-Druckverfahren weniger Wärme erzeugt und/oder benötigt wird, sodass die benötigte Herstellenergie und damit die Herstellkosten reduziert werden können. Ein weiterer Vorteil ist, dass sich eine verbesserte Bauteilqualität und/oder Druckqualität des Fördertopfes ergibt, da ein geringerer Wärmeverzug des Fördertopfes auftritt.

Beim erfindungsgemäßen Verfahren zur Herstellung eines erfindungsgemäßen Fördertopfes werden eine Unwucht des Fördertopfes und/oder des Mantelkörpers, insbesondere eine durch wenigstens ein am Fördertopf (1) und/oder Mantelkörper angebrachtes Funktionselement verursachte Unwucht, ermittelt und eine unwuchtreduzierende Hohlraumstruktur des Fördertopfes und/oder des Mantelkörpers ermittelt, die die Unwucht des Fördertopfes und/oder des Mantelkörpers, insbesondere eine durch wenigstens ein am Fördertopf und/oder Mantelkörper angebrachtes Funktionselement verursachte Unwucht, kompensiert oder wenigstens reduziert. Die Ermittlung der Unwucht des Fördertopfes und/oder des Mantelkörpers sowie die Ermittlung der unwuchtreduzierende Hohlraumstruktur kann mittels Berechnungen, Simulationen und/oder Messungen erfolgen.

Bei einer vorteilhaften Weiterbildung der erfindungsgemäßen Lösung ist vorgesehen, dass der Fördertopf mit der unwuchtreduzierenden Hohlraumstruktur und/oder der Mantelkörper mit der unwuchtreduzierenden Hohlraumstruktur und/oder seine Einzelteile mit der unwuchtreduzierenden Hohlraumstruktur wenigstens teilweise durch ein 3D-Druckverfahren hergestellt wird. Als 3D-Druckverfahren kann beispielsweise Selektives Lasersintern (SLS), Multi-Jet Modeling (MJM), Stereolithografie (SLA), Fused Deposition Modeling (FDM), Fused Filament Fabrication (FFF) oder Continous Filament Fabrication (CFF) eingesetzt werden. Beim SLS-Verfahren sowie beim MJM-Verfahren kann ein Grundmaterial des Fördertopfes und/oder des Mantelkörpers im Rohzustand in einer pulverförmigen und/oder granulierten Form vorliegen. Das pulverförmige und/oder granulierte Grundmaterial kann aus einem metallischen Werkstoff und/oder einem Kunststoff, insbesondere einem thermoplastischen Kunststoff, ausgebildet sein. Als Kunststoff können beispielsweise Polyamid 6, Polyamid 11, Polyamid 12, Polyamid 2000, Polylactide und/oder sonstige Kunststoffe eingesetzt werden. Insbesondere können sonstige Kunststoffe eingesetzt werden, die für 3D-Druckverfahren geeignet sind. Beim SLA-Verfahren kann ein Grundmaterial des Fördertopfes und/oder des Mantelkörpers im Rohzustand in einer flüssigen Form vorliegen. Es ist auch denkbar, dass der Fördertopf und/oder der Mantelkörper und/oder seine Einzelteile vollständig oder teilweise durch lichtaushärtende Kunststoffe und/oder Harze, ausgebildet wird. Bei einem 3D-Druckverfahren kann auch eine Unwucht des Fördertopfes und/oder des Mantelkörpers, insbesondere eine durch wenigstens ein am Fördertopf und/oder Mantelkörper angebrachtes Funktionselement verursachte Unwucht, durch die Hohlraumstruktur kompensiert oder wenigstens reduziert werden, wenn die Hohlräume vollständig und/oder teilweise mit granuliertem und/oder pulverförmigen Mantelkörpermaterial und/oder Zwischenmaterial gefüllt sind.

Bei einem 3D-Druckverfahren weist das erwärmte bzw. geschmolzene Mantelkörpermaterial und/oder Zwischenmaterial eine andere Dichte auf als das granulierte und/oder pulverförmige Mantelkörpermaterial und/oder Zwischenmaterial. Somit kann die Förderfähigkeit des Fördertopfes und/oder des Mantelkörpers verbessert und/oder eine Unwucht des Fördertopfes und/oder des Mantelkörpers reduziert werden, obwohl die Hohlräume vollständig mit granuliertem und/oder pulverförmigen Mantelkörpermaterial und/oder Zwischenmaterial gefüllt sind.

Weitere wichtige Merkmale und Vorteile der Erfindung ergeben sich aus den Unteransprüchen, aus den Zeichnungen und aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht eines erfindungsgemäßen Fördertopfes,
- Fig. 2: eine Seitenansicht eines erfindungsgemäßen Zuführ- und Vorratssystems,
- Fig. 3: eine perspektivische Ansicht eines erfindungsgemäßen Fördertopfes mit mehreren Einzelteilen,
- Fig. 4: eine Schnittdarstellung eines erfindungsgemäßen Fördertopfes,
- Fig. 5: eine Ansicht von unten auf den erfindungsgemäßen Fördertopf der Fig. 1,
- Fig. 6: einen Teilausschnitt einer erfindungsgemäßen Hohlraumstruktur,
- Fig. 7: eine Schnittdarstellung eines weiteren Ausführungsbeispiels eines erfindungsgemäßen Fördertopfes,
- Fig. 8: eine Schnittdarstellung eines weiteren Ausführungsbeispiels eines erfindungsgemäßen Fördertopfes,
- Fig. 9: eine Schnittdarstellung eines weiteren Ausführungsbeispiels eines erfindungsgemäßen Fördertopfes,
- Fig. 10: eine Schnittdarstellung eines weiteren Ausführungsbeispiels eines erfindungsgemäßen Fördertopfes,
- Fig. 11: eine weitere perspektivische Ansicht eines erfindungsgemäßen Fördertopfes mit mehreren Einzelteilen.

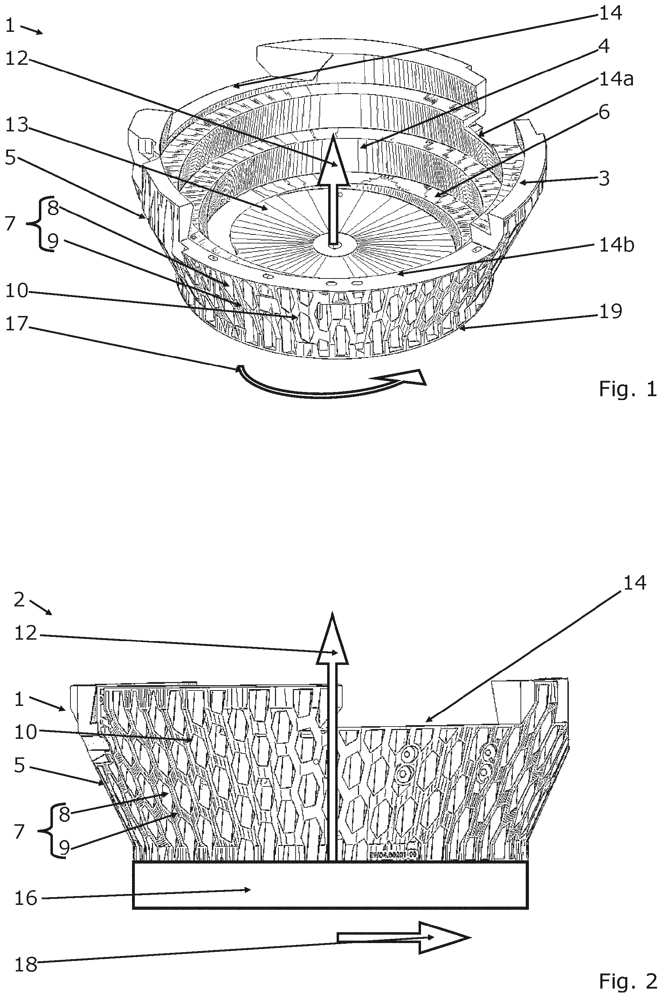

In der Fig. 1 ist ein erfindungsgemäßer Fördertopf 1 in einer perspektivischen Draufsicht gezeigt. Der Fördertopf 1 umfasst einen Mantelkörper 3, der eine Innenfläche 4 und eine Außenfläche 5 aufweist. Die Innenfläche 4 kann zum Transportieren eines Schüttgutes ausgebildet sein. Die Innenfläche 4 kann glattartig und/oder glatt und/oder reibungsreduzierend ausgebildet sein. Beispielhaft weist die Innenfläche 4 eine Förderstruktur 6 zum Transportieren eines Schüttgutes auf, die beispielhaft als schraubenförmiger und/oder wendelförmiger und/oder spiralförmiger umlaufender Rampenabschnitt ausgebildet ist. Die Innenfläche 4 und/oder die Förderstruktur 6 können wenigstens abschnittsweise eine nicht dargestellte Funktionsstrukturoberfläche zur Vorsortierung und/oder Vorvereinzelung von Schüttgut ausbilden.

Der Fördertopf 1 weist einen im Wesentlichen scheibenförmigen Bodenabschnitt 19 auf, der an einem ersten Ende des Mantelkörpers 3 angeordnet ist, sodass wenigstens ein Teilabschnitt des Mantelkörpers 3 und ein Teilabschnitt des Bodenabschnittes 19 einen Schüttgut-Aufnahmebereich 13 ausbilden. Hierbei kann die Förderstruktur 6 so ausgebildet sein, dass sie in diesem Schüttgutaufnahmebereich 13 wenigstens abschnittsweise mündet. Der Mantelkörper 3 weist eine kegelstumpfartige Grundstruktur auf, wobei sich der Mantelkörper 3 ausgehend vom Bodenabschnitt 19 entlang einer Axialachse 12 aufweitet. An einem zweiten Ende des Mantelkörpers 3, welches vom ersten Ende des Mantelkörpers 3 bzw. vom Bodenabschnitt 19 entlang der Axialachse 12 beabstandet ist, sind Bestückungsabschnitte 14, 14a und 14b für nicht dargestellte Funktionselemente ausgebildet. Die Bestückungsabschnitte 14, 14a und 14b können entlang einer Umfangsrichtung 17 des Fördertopfes 1 voneinander beabstandet angeordnet sein. Der Mantelkörper 3 bildet wenigstens abschnittsweise zwischen der Innenfläche 4 und der Außenfläche 5 wenigstens eine Hohlraumstruktur 7 aus. Die Hohlraumstruktur 7 weist mehrere Hohlräume 8 auf, wobei benachbarte Hohlräume 8 wenigstens abschnittsweise durch wenigstens eine Zwischenwandung 9 des Mantelkörpers 3 voneinander getrennt sind. Ferner weist der Mantelkörper 3 an seiner Außenfläche mehrere separate Hohlraumöffnungen 10 auf, in denen die jeweiligen Hohlräume 8 münden. Die Hohlräume 8 und/oder die Hohlraumöffnungen 10 sind wenigstens teilweise in Umfangsrichtung 17 des Fördertopfes 1 voneinander beabstandet angeordnet.

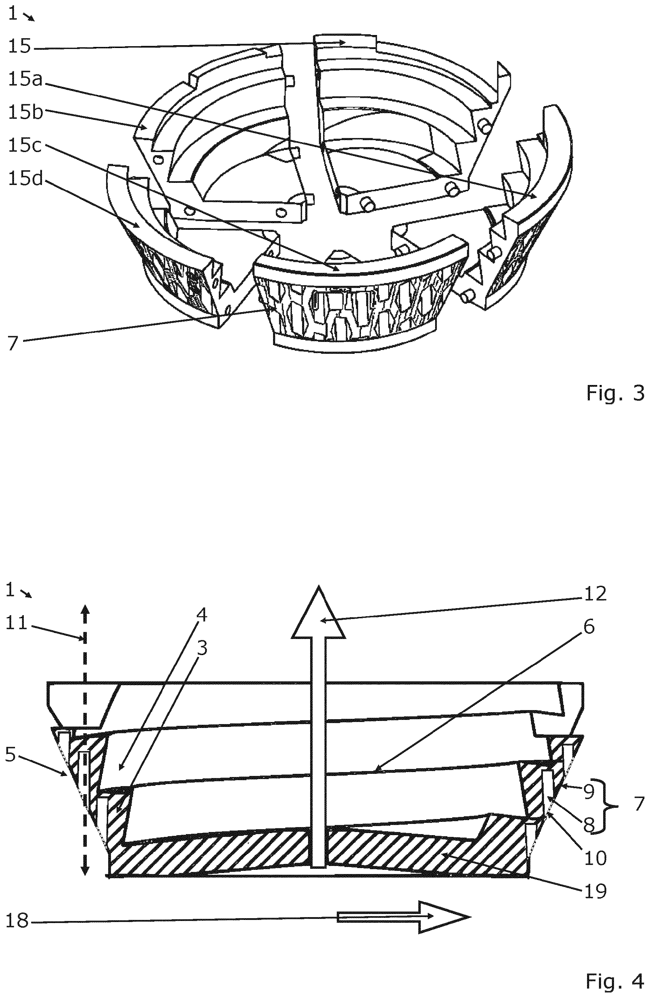

In der Fig. 2 ist ein erfindungsgemäßes Zuführ- und Vorratssystem 2 für ein nicht dargestelltes Schüttgut-Transportsystem in einer Seitenansicht dargestellt. Das Zuführ- und Vorratssystem 2 umfasst den Fördertopf 1 der Fig. 1 und einen Vibrationsantrieb 16. Der Vibrationsantrieb 16 ist zum Transport eines Schüttgutes entlang der Förderstruktur 6 ausgebildet und ist hierfür mit dem Bodenabschnitt 19 des Fördertopfes 1 unmittelbar gekoppelt. In der Fig. 2 ist gut zu erkennen, dass die Hohlraumöffnungen 10 eine sechseckige Begrenzungskontur ausbilden. Ferner sind die Hohlräume 8 und/oder die Hohlraumöffnungen 10 wenigstens teilweise in einer Radialrichtung 18 des Fördertopfes 1, die im Wesentlichen quer zu Axialrichtung 12 ausgerichtet ist, voneinander beabstandet angeordnet. Über den mit dem Fördertopf 1 gekoppelten Vibrationsantrieb 16 kann eine Vibrationsbewegung und/oder eine Schwingungsbewegung des Fördertopfes 1 erzwungen werden, sodass ein im Fördertopf 1 bzw. im Schüttgut-Aufnahmebereich 13 vorhandenes Schüttgut über die für der Struktur 6 zu einem nicht dargestellten Schüttgut-Transportsystem transportiert werden kann. In der Fig. 3 ist eine perspektivische Ansicht eines erfindungsgemäßen Fördertopfes 1 mit mehreren separat hergestellten Einzelteilen 15, 15a, 15b, 15c und 15d dargestellt. Jedes dieser Einzelteile bildet integral jeweils einen Teilabschnitt des Mantelkörpers 3, des Bodenabschnittes 19 und der Förderstruktur 6 aus. Die Einzelteile 15, 15a, 15b, 15c und 15d können beispielsweise lösbar oder nicht lösbar miteinander verbunden sein. Die Einzelteile 15, 15a, 15b, 15c und 15d können beispielsweise stoffschlüssig und/oder kraftschlüssig und/oder formschlüssig miteinander verbunden sein. Die Einzelteile 15, 15a, 15b, 15c und 15d können beispielsweise über Zapfenabschnitte und komplementär ausgebildete Zapfenaufnahmen miteinander verbunden sein. Jedes der Einzelteile 15, 15a, 15b, 15c und 15d weist einen Mantelkörper 3 auf, der wenigstens abschnittsweise zwischen der Innenfläche 4 und der Außenfläche 5 wenigstens eine Hohlraumstruktur 7 ausbildet.

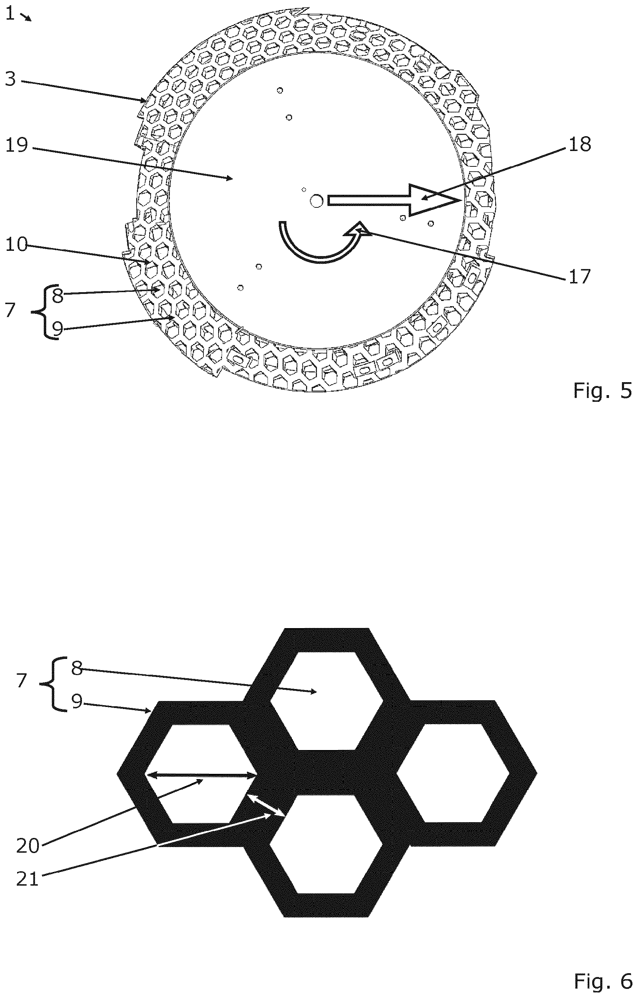

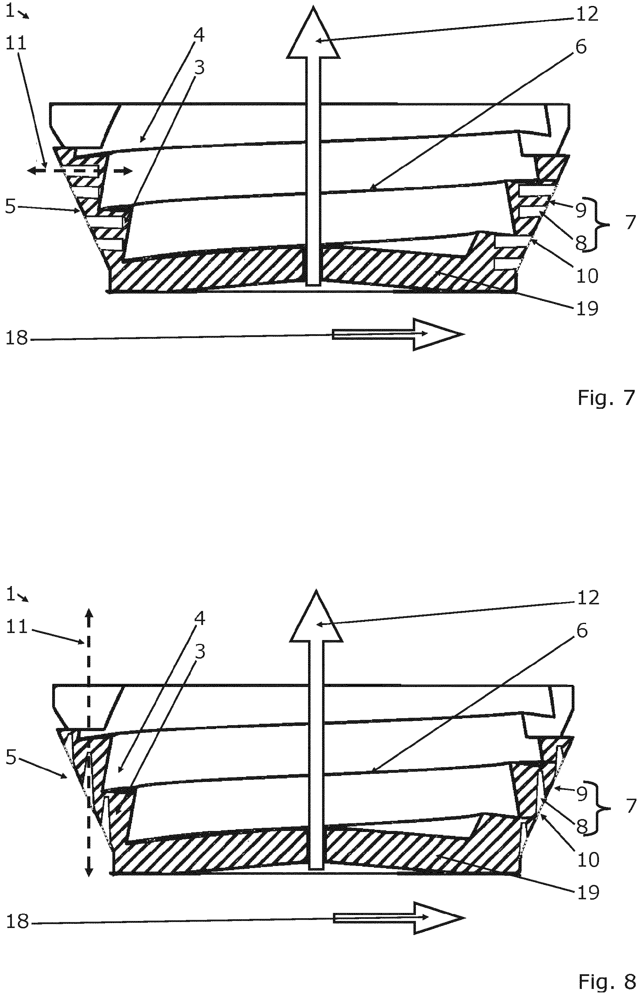

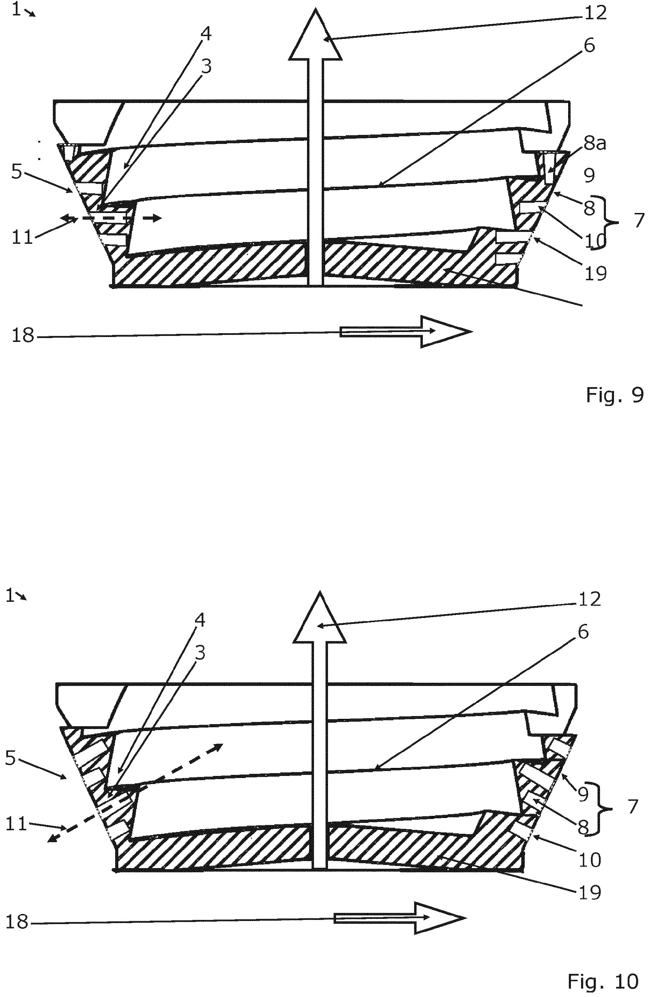

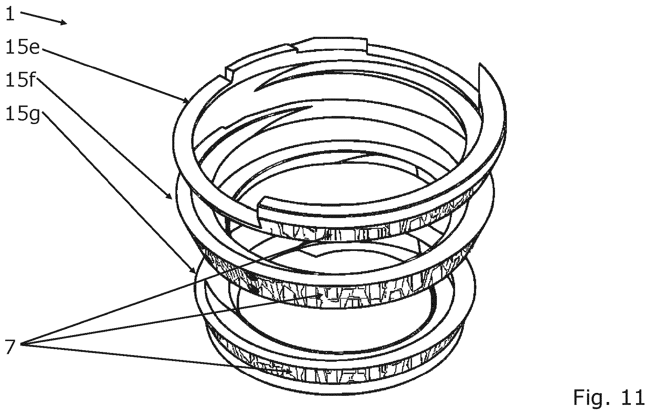

In der Fig. 4 ist ein Längsschnitt eines erfindungsgemäßen Fördertopfes 1 entlang seine Axialachse 12 dargestellt. In dieser Darstellung ist besonders gut zu erkennen, dass die Hohlraumstruktur 7 eine Vielzahl von Hohlräumen 8 umfasst, wobei benachbarte Hohlräume 8 wenigstens abschnittsweise durch eine Zwischenwandung 9 voneinander getrennt sind. Die Hohlräume 8 und/oder die Hohlraumöffnungen 10 sind wenigstens teilweise entlang der Radialrichtung 18 und/oder entlang einer Umfangsrichtung 17 voneinander beabstandet angeordnet. Die Hohlräume 8 der Hohlraumstruktur 7 weisen jeweils eine Hohlraumlängserstreckung 11 auf, die jeweils im Wesentlichen parallel zur Axialachse 12 des Fördertopfes 1 ausgebildet sind. Die Hohlräume 8 der Hohlraumstruktur 7 sind bezüglich ihrer Hohlraumlängserstreckung 11 zylindrisch ausgebildet. Hierbei bilden die Hohlräume 8 wenigstens abschnittsweise eine sechseckartige Querschnittsfläche quer bezüglich ihrer Hohlraumlängserstreckung 11aus, die beispielsweise in der Fig. 5 ersichtlich ist. In der Fig. 5 ist eine Ansicht von unten auf den erfindungsgemäßen Fördertopf 1 der Fig. 1 dargestellt. Auch in dieser Darstellung ist erkennbar, dass die Hohlräume 8 und/oder die Hohlraumöffnungen 10 wenigstens teilweise entlang der Radialrichtung 18 und/oder entlang einer Umfangsrichtung 17 voneinander beabstandet angeordnet sind. Ferner ist die scheibenförmige bzw. kreisförmige Ausgestaltung des Bodenabschnittes 19 erkennbar. In der Fig. 6 ist ein Teilausschnitt einer erfindungsgemäßen Hohlraumstruktur 7 gezeigt. Ein solcher Teilausschnitt kann beispielsweise aus einem Querschnitt durch den Mantelkörper 3 quer zu Axialachse 12 hervorgehen, wobei in der Fig. 6 benachbarte Hohlräume 8 zu erkennen sind, die wenigstens abschnittsweise durch wenigstens eine Zwischenwandung 9 und/oder mehrere Zwischenwandungen 9 getrennt voneinander sind. Die Hohlräume 8 weisen eine sechseckartige Querschnittsfläche quer bezüglich ihrer jeweiligen Hohlraumlängserstreckung 11 auf, wobei die jeweilige Hohlraumlängserstreckung 11 in der Fig. 6 im Wesentlichen parallel zum Flächennormalenvektor der Zeichnungsebene ist. Eine solche sechseckartige Querschnittsfläche kann ein regelmäßiges Sechseck ausbilden. Es kann vorgesehen sein, dass eine Sechseckbreite 20 bzw. ein Sechseckinnendurchmesser 20 der Querschnittsfläche des Hohlraumes 8 größer ist als eine Wandstärke 21 der Zwischenwandung 9 des Mantelkörpers 3. Es kann auch vorgesehen sein, dass eine Sechseckbreite 20 bzw. ein Sechseckinnendurchmesser 20 der Querschnittsfläche des Hohlraumes 8 kleiner ist als eine Wandstärke 21 der Zwischenwandung 9 des Mantelkörpers 3. Es kann auch vorgesehen sein, dass eine Sechseckbreite 20 bzw. ein Sechseckinnendurchmesser 20 der Querschnittsfläche des Hohlraumes 8 im Wesentlichen der Wandstärke 21 der Zwischenwandung 9 des Mantelkörpers 3 entspricht. Die Sechseckbreite 20 kann beispielsweise eine Breite von 1 mm bis 200 mm, insbesondere von 1 mm bis 100 mm, insbesondere von 1 mm bis 60 mm, insbesondere von 1 mm bis 50 mm, insbesondere 1 mm bis 30 mm, insbesondere von 5 mm bis 30 mm, insbesondere von 10 mm bis 30 mm, aufweisen. Die Sechseckbreite 20 kann insbesondere beispielsweise eine Breite von 9 mm bis 21 mm, insbesondere von 10 mm bis 20 mm, insbesondere von 15 mm, aufweisen. Die Wandstärke 21 der Zwischenwandung 9 zwischen zwei Hohlräumen kann beispielsweise 1 mm bis 10 mm, insbesondere 2,5 mm bis 7,5 mm, insbesondere 5 mm, betragen. Die Hohlräume 8 bilden zusammen mit der wenigstens einen Zwischenwandung 9 und/oder mit mehreren Zwischenwandungen 9 eine Zellstruktur, insbesondere eine Wabenstruktur, aus. In der Fig. 7 weist wenigstens ein Hohlraum 8 der Hohlraumstruktur 7 eine Hohlraumlängserstreckung 11 auf, die im Wesentlichen quer zur Axialachse 12 des Fördertopfes 1 ausgebildet ist. In der Fig. 8 ist wenigstens ein Hohlraum 8 der Hohlraumstruktur 7 konisch ausgebildet. Der Hohlraum 8 weitet sich beispielhaft in Richtung der Außenfläche 5 auf. In der Fig. 9 weist wenigstens ein Hohlraum 8 der Hohlraumstruktur 7 eine Hohlraumlängserstreckung 11 auf, die im Wesentlichen quer zur Axialachse 12 des Fördertopfes 1 ausgebildet sind. Ein Hohlraum 8a weist hingegen eine nicht dargestellte Hohlraumlängserstreckung auf, die im Wesentlichen parallel zur Axialachse 12 des Fördertopfes 1 ausgebildet ist, wobei der Hohlraum 8a nicht in der Außenfläche 5 mündet. In der Fig. 10 weist wenigstens ein Hohlraum 8 der Hohlraumstruktur 7 eine Hohlraumlängserstreckung 11 auf, die unter einem Winkel, insbesondere unter 45°, zur Axialachse 12 des Fördertopfes 1 ausgerichtet ist. In der Fig. 11 ist der Fördertopf 1 und/oder sein Mantelkörper in scheibenförmige bzw. ringförmige Einzelteile 15e, 15f und 15g aufgeteilt. Durch diese Aufteilung der Einzelteile 15e, 15f und 15g können niedrige Einzelteile und/oder niedrige Einzelteilhöhen erzielt werden, sodass bei 3D-Druckverfahren die Druckhöhe klein gehalten werden kann. *****

## Patentansprüche

1. Fördertopf (1) für ein Zuführ- und Vorratssystem (2)
- mit einem Mantelkörper (3), der eine Innenfläche (4) und eine Außenfläche (5) aufweist,
- wobei der Mantelkörper (3) wenigstens abschnittsweise zwischen der Innenfläche (4) und der Außenfläche (5) wenigstens eine Hohlraumstruktur (7) ausbildet,
- wobei die Innenfläche (4) eine Förderstruktur (6) zum Transportieren eines Schüttgutes aufweist,
**dadurch gekennzeichnet,**
- **dass** der Fördertopf (1) und/oder der Mantelkörper (3) und/oder seine Einzelteile (15) wenigstens teilweise durch ein 3D-Druckverfahren hergestellt ist, und
- **dass** eine Unwucht des Fördertopfes (1), insbesondere eine durch wenigstens ein am Fördertopf (1) und/oder Mantelkörper (3) angebrachtes Funktionselement verursachte Unwucht, durch die Hohlraumstruktur (7) kompensiert oder wenigstens reduziert ist.

2. Fördertopf (1) nach einem der vorhergehenden Ansprüche,
**dadurch gekennzeichnet,**
- **dass** die Hohlraumstruktur (7) mehrere Hohlräume (8) ausbildet, wobei benachbarte Hohlräume (8) wenigstens abschnittsweise durch wenigstens eine Zwischenwandung (9) des Mantelkörpers (3) voneinander getrennt sind,
- **dass** das von allen Zwischenwandungen (9) der Hohlraumstruktur (7) ausgefüllte Raumvolumen ein Zwischenmaterialvolumen definiert,
- **dass** das von allen Hohlräumen (8) der Hohlraumstruktur (7) begrenzte Hohlvolumen ein Gesamthohlvolumen definiert,
- **dass** das Gesamthohlvolumen kleiner oder größer oder gleich dem Zwischenmaterialvolumen ist.

3. Fördertopf (1) nach einem der vorhergehenden Ansprüche,
**dadurch gekennzeichnet,**
- **dass** die Hohlraumstruktur (7) mehrere Abschnitte aufweist,
- wobei ein Abschnitt mehrere Hohlräume (8) ausbildet, wobei benachbarte Hohlräume (8) des Abschnittes wenigstens abschnittsweise durch wenigstens eine Zwischenwandung (9) des Mantelkörpers (3) voneinander getrennt sind,
- **dass** das von allen Zwischenwandungen (9) eines Abschnittes der Hohlraumstruktur (7) ausgefüllte Raumvolumen ein Abschnittsmaterialvolumen definiert,
- **dass** das von allen Hohlräumen (8) eines Abschnittes der Hohlraumstruktur (7) begrenzte Hohlvolumen ein Abschittshohlvolumen definiert,
- **dass** das Verhältnis von Abschittshohlvolumen zu Abschnittsmaterialvolumen für verschiedene Abschnitte der Hohlraumstruktur (7) gleich und/oder verschiedenen ausgebildet ist.

4. Fördertopf (1) nach Anspruch 3,
**dadurch gekennzeichnet,**
- **dass** die Hohlraumstruktur (7) entlang einer Axialachse (12) und/oder entlang einer Radialrichtung (18) und/oder entlang einer Umfangsrichtung (17) des Fördertopfes (1) mehrere Abschnitte aufweist,
- wobei das Verhältnis von Abschittshohlvolumen zu Abschnittsmaterialvolumen der Abschnitte wenigstens abschnittsweise entlang einer Axialachse (12) und/oder entlang einer Radialrichtung (18) und/oder entlang einer Umfangsrichtung (17) des Fördertopfes (1) variiert, insbesondere linear, nichtlinear und/oder stufenweise variiert.

5. Fördertopf (1) nach Anspruch 3 oder 4,
**dadurch gekennzeichnet,**
- **dass** wenigstens ein Hohlraum (8) der Hohlraumstruktur (7) in einer Hohlraumöffnung (10) an der Außenfläche (5) mündet, oder
- **dass** eine Gruppe von Hohlräumen (8) der Hohlraumstruktur (7) in einer gemeinsamen Hohlraumöffnung (10) an der Außenfläche (5) mündet, oder
- **dass** alle Hohlräume (8) der Hohlraumstruktur (7) jeweils in einer separaten Hohlraumöffnung (10) an der Außenfläche (5) münden.

6. Fördertopf (1) nach einem der vorhergehenden Ansprüche,
**dadurch gekennzeichnet,**
- **dass** der Fördertopf (1) und/oder der Mantelkörper (3) und/oder seine Einzelteile (15) wenigstens teilweise aus Vollmaterial durch spanabhebende Bearbeitung hergestellt ist, und/oder
- **dass** der Fördertopf (1) und/oder der Mantelkörper (3) und/oder seine Einzelteile (15) wenigstens teilweise durch Kunststoffspritzguss hergestellt ist.

7. Fördertopf (1) nach einem der Ansprüche 1 bis 6 für ein Zuführ- und Vorratssystem (2), **dadurch gekennzeichnet,**
- **dass** die Innenfläche (4) und/oder die Förderstruktur (6) des Fördertopfes (1) wenigstens abschnittsweise eine Funktionsstrukturoberfläche ausbildet.

8. Fördertopf (1) nach Anspruch 7,
**dadurch gekennzeichnet,**
**dass** die Funktionsstrukturoberfläche wenigstens abschnittsweise zur Vorsortierung und/oder Vorvereinzelung von Schüttgut ausgebildet ist.

9. Zuführ- und Vorratssystem (2) für ein Schüttgut-Transportsystem
- mit einem Fördertopf (1) nach einem der vorhergehenden Ansprüche,
- mit einem Vibrationsantrieb (16) zum Transport eines Schüttgutes entlang der Förderstruktur (6),
- wobei der Vibrationsantrieb (16) mit dem Fördertopf (1) mittelbar oder unmittelbar gekoppelt ist.

10. Zuführ- und Vorratssystem (2) nach Anspruch 9,
**dadurch gekennzeichnet,**
**dass** das Zuführ- und Vorratssystem (2) als Vibrationswendelförderer zur vertikalen Förderung eines Schüttgutes ausgebildet ist.

11. Verfahren zur Herstellung eines Fördertopfes nach einem der Ansprüche 1 bis 8,
- bei dem Fördertopf (1) und/oder der Mantelkörper (3) und/oder seine Einzelteile (15) wenigstens teilweise durch ein 3D-Druckverfahren hergestellt wird,
- bei dem eine Unwucht des Fördertopfes (1) und/oder des Mantelkörpers (3), insbesondere eine durch wenigstens ein am Fördertopf (1) und/oder Mantelkörper (3) angebrachtes Funktionselement verursachte Unwucht, ermittelt wird,
- bei dem eine unwuchtreduzierende Hohlraumstruktur (7) des Fördertopfes (1) und/oder des Mantelkörpers (3) ermittelt wird, die die Unwucht des Fördertopfes (1) und/oder des Mantelkörpers (3), insbesondere eine durch wenigstens ein am Fördertopf (1) und/oder Mantelkörper (3) angebrachtes Funktionselement verursachte Unwucht, kompensiert oder wenigstens reduziert.

## Claims

1. Bowl feeder (1) for a feed and storage system (2)
- with a casing body (3), which has an inner surface (4) and an outer surface (5),
- wherein the casing body (3) forms at least one cavity structure (7), at least in sections, between the inner surface (4) and the outer surface (5),
- wherein the inner surface (4) has a feed structure (6) for transporting a bulk material,
**characterized in that**
- the bowl feeder (1) and/or the casing body (3) and/or their individual parts (15) are produced at least partially using a 3D printing process, and
- an imbalance of the bowl feeder (1), in particular an imbalance caused by at least one functional element attached to the bowl feeder (1) and/or the casing body (3), is compensated or at least reduced by the cavity structure (7).

2. Bowl feeder (1) according to any one of the preceding claims,
**characterized in that**
- the cavity structure (7) forms a plurality of cavities (8), wherein adjacent cavities (8) are separated from one another, at least in sections, by at least one partition (9) of the casing body (3),
- the spatial volume filled by all partitions (9) of the cavity structure (7) defines an intermediate material volume,
- the hollow volume delimited by all cavities (8) of the cavity structure (7) defines a total hollow volume,
- the total hollow volume is smaller or larger or equal to the intermediate material volume.

3. Bowl feeder (1) according to any one of the preceding claims,
**characterized in that**
- the cavity structure (7) has a plurality of sections,
- wherein a section forms a plurality of cavities (8), wherein adjacent cavities (8) of the section are separated from one another, at least in sections, by at least one partition (9) of the casing body (3),
- the spatial volume filled by all partitions (9) of a section of the cavity structure (7) defines a section material volume,
- the hollow volume delimited by all cavities (8) of a section of the cavity structure (7) defines a section hollow volume,
- the ratio of the section hollow volume to the section material volume is the same and/or different for different sections of the cavity structure (7).

4. Bowl feeder (1) according to claim 3,
**characterized in that**
- the cavity structure (7) has a plurality of sections along an axial axis (12) and/or along a radial direction (18) and/or along a circumferential direction (17) of the bowl feeder (1),
- wherein the ratio of the section hollow volume to the section material volume of the sections varies, at least in sections, along an axial axis (12) and/or along a radial direction (18) and/or along a circumferential direction (17) of the bowl feeder (1), in particular in a linear, non-linear and/or step-wise manner.

5. Bowl feeder (1) according to claim 3 or 4,
**characterized in that**
- at least one cavity (8) of the cavity structure (7) opens into a cavity opening (10) on the outer surface (5), or
- a group of cavities (8) of the cavity structure (7) opens into a common cavity opening (10) on the outer surface (5), or
- all cavities (8) of the cavity structure (7) each open into a separate cavity opening (10) on the outer surface (5).

6. Bowl feeder (1) according to any one of the preceding claims,
**characterized in that**
- the bowl feeder (1) and/or the casing body (3) and/or their individual parts (15) are produced at least partially from solid material by machining, and/or
- the bowl feeder (1) and/or the casing body (3) and/or their individual parts (15) are produced at least partially by plastic injection molding.

7. Bowl feeder (1) according to any one of claims 1 to 6 for a feed and storage system (2), **characterized in that**
- the inner surface (4) and/or the feed structure (6) of the bowl feeder (1) forms a functional structure surface, at least in sections.

8. Bowl feeder (1) according to claim 7,
**characterized in that**
the functional structure surface is formed, at least in sections, for pre-sorting and/or pre-separating bulk material.

9. Feed and storage system (2) for a bulk material transport system
- with a bowl feeder (1) according to any one of the preceding claims,
- with a vibration drive (16) for transporting a bulk material along the feed structure (6),
- wherein the vibration drive (16) is directly or indirectly coupled to the bowl feeder (1).

10. Feed and storage system (2) according to claim 9,
**characterized in that**
the feed and storage system (2) is formed as a vibrating spiral conveyor for vertically conveying a bulk material.

11. Method for producing a bowl feeder according to any one of claims 1 to 8,
- in which the bowl feeder (1) and/or the casing body (3) and/or their individual parts (15) are produced, at least partially, using a 3D printing process,
- in which an imbalance of the bowl feeder (1) and/or the casing body (3), in particular an imbalance caused by at least one functional element attached to the bowl feeder (1) and/or casing body (3), is determined,
- in which an imbalance-reducing cavity structure (7) of the bowl feeder (1) and/or the casing body (3) is determined, which compensates or at least reduces the imbalance of the bowl feeder (1) and/or the casing body (3), in particular an imbalance caused by at least one functional element attached to the bowl feeder (1) and/or the casing body (3).

## Revendications

1. Pot de transport (1) pour un système d'alimentation et de stockage (2)
- avec un corps d'enveloppe (3) qui présente une surface intérieure (4) et une surface extérieure (5),
- dans lequel le corps d'enveloppe (3) forme au moins par sections au moins une structure de cavité (7) entre la surface intérieure (4) et la surface extérieure (5),
- dans lequel la surface intérieure (4) présente une structure de transport (6) pour le transport d'un produit en vrac,
**caractérisé en ce que**
- le pot de transport (1) et/ou le corps d'enveloppe (3) et/ou ses pièces individuelles (15) sont fabriqués au moins partiellement par un procédé d'impression 3D, et
- un déséquilibre du pot de transport (1), en particulier un déséquilibre provoqué par au moins un élément fonctionnel placé sur le pot de transport (1) et/ou le corps d'enveloppe (3), est compensé ou au moins réduit par la structure de cavités (7).

2. Pot de transport (1) selon l'une quelconque des revendications précédentes,
**caractérisé en ce que**
- la structure de cavités (7) forme plusieurs cavités (8), dans lequel des cavités voisines (8) sont séparées les unes des autres au moins par sections par l'intermédiaire d'au moins une paroi intermédiaire (9) du corps d'enveloppe (3),
- le volume spatial rempli par toutes les parois intermédiaires (9) de la structure de cavités (7) définit un volume de matériau intermédiaire,
- le volume creux délimité par toutes les cavités (8) de la structure de cavités (7) définit un volume creux total,
- le volume creux total est inférieur ou supérieur ou égal au volume de matériau intermédiaire.

3. Pot de transport (1) selon l'une quelconque des revendications précédentes,
**caractérisé en ce que**
- la structure de cavités (7) présente plusieurs sections,
- dans lequel une section forme plusieurs cavités (8), dans lequel des cavités (8) voisines de la section sont séparées les unes des autres au moins par sections par l'intermédiaire d'au moins une paroi intermédiaire (9) du corps d'enveloppe (3),
- le volume spatial rempli par toutes les parois intermédiaires (9) d'une section de la structure de cavités (7) définit un volume de matériau de section,
- le volume creux délimité par toutes les cavités (8) d'une section de la structure de cavités (7) définit un volume creux de section,
- le rapport entre le volume creux de section et le volume de matériau de section est identique et/ou différent pour différentes sections de la structure de cavités (7).

4. Pot de transport (1) selon la revendication 3,
**caractérisé en ce que**
- la structure de cavités (7) présente plusieurs sections le long d'un axe axial (12) et/ou le long d'une direction radiale (18) et/ou le long d'une direction circonférentielle (17) du pot de transport (1),
- dans lequel le rapport entre le volume creux de section et le volume de matériau de section des sections varie au moins par sections le long d'un axe axial (12) et/ou le long d'une direction radiale (18) et/ou le long d'une direction circonférentielle (17) du pot de transport (1), en particulier varie de manière linéaire, non linéaire et/ou par paliers.

5. Pot de transport (1) selon la revendication 3 ou 4,
**caractérisé en ce que**
- au moins une cavité (8) de la structure de cavités (7) débouche dans une ouverture de cavité (10) sur la surface extérieure (5), ou
- un groupe de cavités (8) de la structure de cavités (7) débouche dans une ouverture de cavité commune (10) sur la surface extérieure (5), ou
- toutes les cavités (8) de la structure de cavités (7) débouchent respectivement dans une ouverture de cavité (10) séparée sur la surface extérieure (5).

6. Pot de transport (1) selon l'une quelconque des revendications précédentes,
**caractérisé en ce que**
- le pot de transport (1) et/ou le corps d'enveloppe (3) et/ou ses pièces individuelles (15) sont fabriqués au moins partiellement en matériau plein par usinage par enlèvement de copeaux, et/ou
- le pot de transport (1) et/ou le corps d'enveloppe (3) et/ou ses pièces individuelles (15) sont fabriqués au moins partiellement par moulage par injection de matière plastique.

7. Pot de transport (1) selon l'une quelconque des revendications 1 à 6 pour un système d'alimentation et de stockage (2), **caractérisé en ce que**
- la surface intérieure (4) et/ou la structure de transport (6) du pot de transport (1) forme au moins par sections une surface de structure fonctionnelle.

8. Pot de transport (1) selon la revendication 7,
**caractérisé en ce que**
la surface de la structure fonctionnelle est conçue au moins par sections pour le prétriage et/ou la préindividualisation de produits en vrac.

9. Système d'alimentation et de stockage (2) pour un système de transport de produits en vrac
- avec un pot de transport (1) selon l'une quelconque des revendications précédentes,
- avec un entraînement vibratoire (16) pour le transport d'un produit en vrac le long de la structure de transport (6),
- dans lequel l'entraînement vibratoire (16) est couplé directement ou indirectement au pot de transport (1).

10. Système d'alimentation et de stockage (2) selon la revendication 9,
**caractérisé en ce que**
le système d'alimentation et de stockage (2) est conçu en tant que transporteur hélicoïdal vibratoire pour le transport vertical d'un produit en vrac.

11. Procédé de fabrication d'un pot de transport selon l'une quelconque des revendications 1 à 8,
- dans lequel le pot de transport (1) et/ou le corps d'enveloppe (3) et/ou ses pièces individuelles (15) sont fabriqués au moins partiellement par un procédé d'impression 3D,
- dans lequel un déséquilibre du Pot de transport (1) et/ou du corps d'enveloppe (3), en particulier un déséquilibre provoqué par au moins un élément fonctionnel monté sur le Pot de transport (1) et/ou le corps d'enveloppe (3), est déterminé,
- dans lequel une structure de cavités (7) du pot de transport (1) et/ou du corps d'enveloppe (3) est déterminée, structure qui réduit le déséquilibre et compense ou au moins réduit le déséquilibre du pot de transport (1) et/ou du corps d'enveloppe (3), en particulier un déséquilibre provoqué par au moins un élément fonctionnel placé sur le pot de transport (1) et/ou le corps d'enveloppe (3).
